# DEMANDE DE BREVET EUROPEEN

(11) **EP 1 059 747 A1**
(43) Date de publication de la demande: **13.12.2000**
(21) Numéro de dépôt: 00401570.7
(22) Date de dépôt: 05.06.2000
(51) Int. Cl.: H04B 10/18, H04B 10/17

(54) **Compensation de l'effet raman par pompage dans un système de transmission à multiplexage en longueur d'onde**

(30) Priorité: 10.06.1999 FR 9907324
(71) Demandeur: ALCATEL, 75008 Paris (FR)
(72) Inventeur: Bigo, Sébastien, 91120 Palaiseau (FR); Hamaide, Jean-Pierre, 91180 St. Germain Les Arpajon (FR); Gauchard, Stéphane, 92340 Bourg La Reine (FR)
(74) Mandataire: Lamoureux, Bernard

(57) **Abrégé**

L'invention concerne les systèmes de transmission par fibres optiques à multiplexage en longueur d'onde; dans de tels systèmes, l'amplification par effet Raman stimulé provoque des variations de gain entre les différents canaux du multiplex, et plus précisément une inclinaison du gain.

Pour corriger cette inclinaison, l'invention propose d'injecter dans le système de transmission une ou plusieurs pompes, à des longueurs d'onde inférieures à celles des canaux du multiplex, de sorte que le gain Raman des pompes corrige l'inclinaison.

## Description

La présente invention concerne le domaine des transmissions par fibres optiques, et plus spécifiquement, le domaine des transmissions par fibres optiques à multiplexage en longueur d'onde.

Le multiplexage en longueur d'onde a rendu possible une augmentation considérable des capacités des systèmes de transmission par fibres optiques. Toutefois, l'effet Raman ou plus exactement l'amplification par effet Raman stimulé (SRS, acronyme de l'anglais "Stimulated Raman Scattering") constitue une limite importante; cet effet est par exemple décrit dans l'ouvrage G.P. Agrawal, Nonlinear Fibre Optics, Academic Press 1980. Pour un système de transmission à multiplexage en longueur d'onde, l'effet Raman provoque un décalage en gain ou inclinaison (en anglais "tilt") du spectre après transmission. En d'autres termes, un spectre présentant une pluralité de canaux de puissance sensiblement identique en début de propagation présente après propagation du fait de l'effet Raman des puissances plus faibles pour les canaux de longueurs d'onde les plus faibles. Une solution connue à ce problème consiste à adapter le gain des amplificateurs utilisés. Cette solution est néanmoins limitée dans la plage de correction possible.

N. Zirngibl, Analytical model of Raman gain effects in massive wavelength division multiplexed transmission systems, Electronics Letters, vol. 34 n°14 (1998), pp. 789-790 propose un modèle des effets du gain Raman, montrant que la distorsion spectrale induite par l'amplification par effet Raman stimulé ne dépend que de la puissance totale injectée, et non pas de la distribution spectrale de cette puissance.

Cette inclinaison du spectre est par exemple décrite dans S. Bigo et autres, Investigation of stimulated Raman scattering on WDM structures over various types of fiber infrastructures, OFC'99 paper WJ7, 21-26 février 1999. Ce document mesure les effets de l'amplification par effet Raman stimulé, mais ne propose pas de solution au problème.

D. N. Christodoulides et R. B. Jander, Evolution of Stimulated Raman Crosstalk in Wavelength Division Multiplex Systems, IEEE Photonics Technilogy Letter, vol. 8 n°12, Décembre 1996, pp. 1722-1724 propose une simulation numérique de la diaphonie provoquée par l'effet Raman entre les différents canaux d'un système de transmission en multiplexage en longueur d'onde. Ce document utilise une approximation triangulaire du profil de gain Raman sur le multiplex.

A. R. Chraplyvy, Optical power limits in multi-channel wavelength division multiplexed systems due to Stimulated Raman Scattering, Electronics Letters, vol. 20 n°2 (1984), pp. 58-59 propose aussi une approximation triangulaire du gain Raman dans un système de transmission à multiplexage en longueur d'onde; il est précisé que les modèles fournis dans ce document peuvent être utilisés pour estimer les limitations induites par l'amplification par effet Raman stimulé. Ce document ne propose pas de solution aux problèmes que soulève cette amplification.

T. Sylvestre et autres, Stimulated Raman suppression under dual-frequency pumping in single mode fibers, Electronics Letters, vol. 34 n°14 (1998), pp. 1417-1418 décrit un montage expérimental de suppression de l'amplification par effet Raman stimulé, par pompage d'une fibre monomode préservant la polarisation à l'aide de deux pompes distantes de deux fois le décalage en fréquence provoqué par l'effet Raman dans la fibre.

Il existe donc un besoin d'une solution simple et efficace, qui permette de résoudre le problème de l'inclinaison spectrale provoquée par l'amplification par effet Raman stimulé dans des systèmes de transmission à multiplexage en longueur d'onde.

L'invention propose une solution à ce problème. Elle est simple à mettre en oeuvre, même dans des réseaux existants, et n'est pas pénalisante pour la transmission.

Plus précisément, l'invention propose un système de transmission par fibres optiques à multiplexage en longueur d'onde, comprenant une fibre dans laquelle se propagent des signaux dans une plage de longueurs d'onde, et des moyens d'injection dans la fibre d'au moins une pompe à une longueur d'onde inférieure à la dite plage, la longueur d'onde et la puissance de la pompe étant choisies de sorte à corriger l'inclinaison provoquée par l'amplification par effet Raman stimulé sur les signaux dans la dite plage de fréquences.

De préférence, la différence entre la longueur d'onde la plus basse de la dite plage de longueurs d'onde et la longueur d'onde dune pompe est comprise entre 10 et 15 THz.

Dans un mode de réalisation, les moyens d'injection injectent la pompe dans le sens de propagation des dits signaux.

Dans un autre mode de réalisation, les moyens d'injection injectent la pompe dans le sens inverse du sens de propagation des dits signaux.

L'invention propose encore un procédé pour corriger l'inclinaison provoquée par l'amplification par effet Raman stimulé sur les signaux d'un système de transmission par fibres optiques à multiplexage en longueur d'onde, lors de la propagation dans une fibre des dits signaux, comprenant l'injection dans la fibre d'au moins une pompe à une longueur d'onde inférieure à la longueur d'onde des dits signaux.

De préférence, la différence entre la longueur d'onde la plus basse des dits signaux et la longueur d'onde d'une pompe est comprise entre 10 et 15 THz.

Dans un mode de réalisation, la pompe est injectée dans le sens de propagation des dits signaux.

Dans un autre mode de réalisation, la pompe est injectée dans le sens inverse du sens de propagation des dits signaux.

D'autres caractéristiques et avantages de l'invention apparaîtront à la lecture de la description qui suit de modes de réalisation de l'invention, donnée à titre d'exemple et en référence aux dessins annexés, qui montrent
- figure 1, une représentation schématique du gain Raman;
- figure 2, une représentation schématique du spectre d'entrée dans un système de transmission à multiplexage en longueur d'onde selon l'invention;
- figure 3, une représentation schématique du spectre de sortie dans le système de transmission de l'invention;
- figure 4, une représentation schématique du spectre de sortie dans le système de transmission de la figure 3, mais sans le signal de pompe.

L'invention propose, pour compenser l'inclinaison spectrale provoquée par l'amplification par effet Raman stimulé, d'injecter dans un système de transmission une pompe, à une longueur d'onde inférieure aux longueurs d'onde utilisées pour la transmission à multiplexage en longueur d'onde.

L'amplification par effet Raman stimulé de cette pompe permet de corriger l'inclinaison de gain dans la plage de longueurs d'onde du système de transmission.

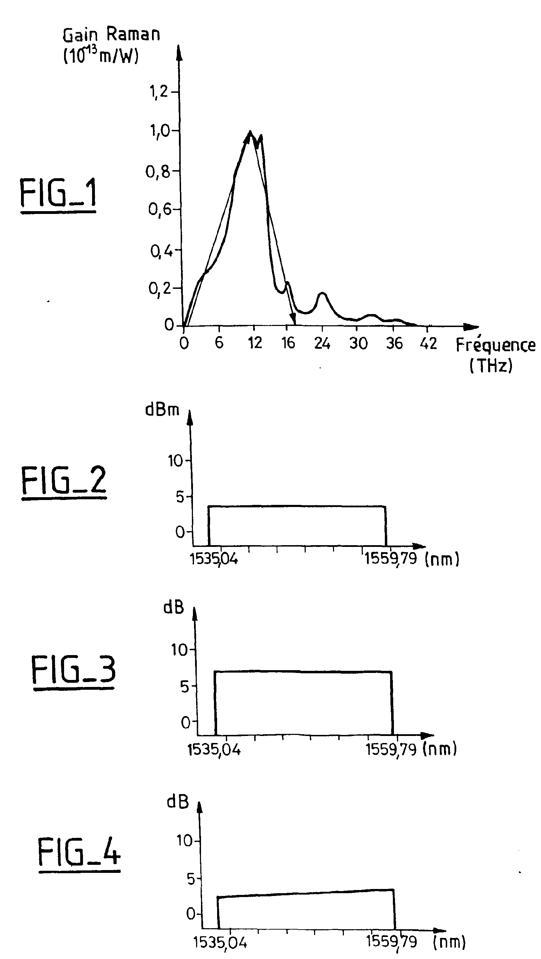

La figure 1 est extraite de R. H. Stolen, (R.H. Stolen, proc. IEEE, 68, 1232 (1980)) et montre une représentation schématique du gain Raman; on a représenté en ordonnées le gain en 10⁻¹³ m/W. L'axe des abscisses donne le décalage spectral en THz, par rapport à la longueur d'onde du signal injecté. La figure montre que la pente du gain est d'abord positive, jusqu'à des décalages de 13 THz, puis est ensuite négative. On retrouve la forme triangulaire mentionnée plus haut. Le gain Raman est faible - moins de 0,2.10⁻¹³ m/W pour des décalages au-delà de 20 THz.

Dans un système à multiplexage en longueur d'onde, chacun des canaux du multiplex provoque un gain de cette allure. La conséquence en est la variation de l'inclinaison du gain déjà mentionnée. Pour pallier cette inclinaison, l'invention propose d'injecter dans la fibre une pompe, à une longueur d'onde inférieure à la plus faible des longueurs d'onde du multiplex.

La pompe est choisie de sorte à ce que le gain d'amplification par effet Raman stimulé induit par la pompe compense l'inclinaison provoquée par l'amplification par effet Raman stimulé sur les canaux du multiplex. La puissance de la pompe comme son spectre sont choisis en fonction du positionnement spectral des canaux du multiplex, et de l'inclinaison à corriger. Le résultat obtenu - la correction de l'inclinaison - se mesure sur le spectre des signaux, comme expliqué en référence aux figures 3 et 4.

On peut par exemple placer une pompe à une longueur d'onde inférieure d'environ 13 THz à la longueur d'onde la plus faible des canaux du multiplex. De la sorte, le pic du gain Raman provoqué par la pompe correspond sensiblement à la longueur d'onde du premier canal du multiplex, et le gain Raman de la pompe est décroissant sur les premiers canaux du multiplex. Cette décroissance est avantageuse, car elle permet de mieux corriger l'inclinaison provoquée par le gain Raman.

Une telle pompe permet de corriger l'inclinaison due à l'amplification par effet Raman stimulé, sur les premiers canaux du multiplex, sur des fréquences environ 7 THz ou 50 nm au-delà de la longueur d'onde du premier canal.

Pour compléter cette correction, on peut prévoir d'autres pompes, à des longueurs d'onde plus proches de la longueur d'onde du premier canal du multiplex. En jouant sur la position spectrale des pompes, et sur leur puissance respective, on peut générer une correction appropriée, non seulement sur une plage de 7 THz au-delà de la longueur d'onde du premier canal, mais jusqu'à 20 THz environ au-delà de la longueur d'onde du premier canal du multiplex.

Pour un système de transmission à multiplexage en longueur d'onde classique, avec des canaux entre 1530 et 1560 nm, on pourrait ainsi placer la pompe ou les pompes dans des plages de longueur d'onde entre 1400 et 1450 nm. On pourrait aussi choisir des pompes à des longueurs d'onde entre 10 et 15 THz en dessous de la longueur d'onde la plus basse du multiplex.

La pompe peut être injectée dans la liaison en même temps que les signaux multiplexés en longueurs d'onde. On peut aussi l'injecter avant ou après les signaux. Dans ce cas, la pompe est co-propagative. L'effet Raman se produit aussi pour des pompes contra-propagatives, qui se propagent en sens inverse du signal; on peut aussi mettre en oeuvre l'invention avec de telles pompes contra-propagatives. Dans ce cas, la pompe est par exemple injectée en fin de liaison, et corrige aussi l'inclinaison, en augmentant le gain sur les canaux de longueurs d'onde les plus basses du multiplex.

De préférence, on choisit le lieu d'injection de la pompe dans la liaison de sorte à découpler l'effet Raman induit par la pompe sur le multiplex, et l'effet Raman propre du multiplex. En d'autres termes, il est avantageux que le gain induit par la pompe sur les longueurs d'onde les plus faibles du multiplex ne soit pas ou peu transféré depuis les faibles longueurs d'onde vers les longueurs d'ondes les plus importantes, par effet Raman à l'intérieur du multiplex. Une solution pour cela consiste à injecter la pompe lorsque la puissance des signaux du multiplex a diminué. On peut donc avantageusement utiliser une pompe contra-propagative située en fin de liaison; on pourrait aussi utiliser une pompe co-propagative déportée, la pompe étant située en fin de liaison ou en début de liaison.

On utilise pour générer la pompe et l'injecter dans la fibre les moyens connus en soi, tels que lasers, coupleurs, multiplexeurs, circulateurs et autres.

L'invention permet de la sorte très simplement de corriger l'inclinaison provoquée par l'amplification par effet Raman stimulé; il n'est pas nécessaire grâce à l'invention de modifier le gain des amplificateurs, ou de prévoir des filtres correctifs. La solution proposée évite l'influence de filtres de correction sur le bruit des amplificateurs. L'invention assure encore un gain supplémentaire par rapport aux solutions existantes à base de filtres, ce qui réduit l'accumulation de bruit dans le système.

La figure 2 montre une représentation schématique du spectre d entrée dans un système de transmission à multiplexage en longueur d'onde selon l'invention comportant 32 canaux; en ordonnée sont portées les puissances en dB et en abscisse les longueurs d'onde en nm. Les différents canaux du multiplex sont dune puissance sensiblement égale, fixée à 3dBm dans l'exemple de la figure 2. On utilise une pompe co-propagative, avec une longueur d'onde 13 THz en dessous de la longueur d'onde du canal le plus bas du multiplex. La puissance de la pompe est ajustée pour corriger l'inclinaison provoquée par l'amplification par effet Raman stimulé sur les premiers canaux. On a dans l'exemple une puissance de pompe égale à 20 dBm dans la fibre de transmission.

Les figures 3 et 4 montrent une représentation schématique du spectre de sortie dans le système de transmission de l'invention avec et sans le signal de pompe. En ordonnée sont portées les puissances en dB calculées par rapport à la même référence de puissance arbitraire , et en abscisse les longueurs d'onde en nm. Les spectres des figures 3 et 4 sont obtenus après la propagation des signaux dont le spectre est porté à la figure 2, dans 100 km de fibre monomode de ligne classique. Sans la pompe, on constate sur la figure 4 que la différence de puissance entre les canaux de longueur d'onde la plus faible et les canaux de longueur d'onde la plus élevée est de 1.2 dB. Elle est réduite à 0.08 dB en présence de la pompe, comme le montre la figure 3; la pompe est dans ce cas une pompe à 1439 nm, d'une puissance de 20 dBm. En présence de la pompe, la puissance par canal est d'environ 3 dB supérieure en sortie de fibre. Dans les systèmes à plusieurs tronçons de fibres, ce signal optique est injecté à l'entrée du répéteur suivant. Plus puissant, il conduit à une amélioration sensible du rapport signal-à-bruit en fin de liaison, donc du taux d'erreur.

Bien entendu, la présente invention n'est pas limitée aux exemples et modes de réalisation décrits et représentés, mais elle est susceptible de nombreuses variantes accessibles à l'homme de l'art. On peut injecter la ou les pompes non seulement aux extrémités de la liaison, mais plus généralement en tout point de la liaison. On pourrait aussi utiliser des pompes aux deux extrémités de la liaison.

L'invention s'applique aussi bien aux liaisons sans répéteurs qu'aux liaisons à répéteurs, dans un ou dans chaque tronçon entre deux répéteurs.

## Revendications

1. Un système de transmission par fibres optiques à multiplexage en longueur d'onde, comprenant une fibre dans laquelle se propagent des signaux dans une plage de longueurs d'onde, et des moyens d'injection dans la fibre d au moins une pompe à une longueur d'onde inférieure à la dite plage, la longueur d'onde et la puissance de la pompe étant choisies de sorte à corriger l'inclinaison provoquée par l'amplification par effet Raman stimulé sur les signaux dans la dite plage de fréquences.

2. Le système selon la revendication 1, caractérisé en ce que la différence entre la longueur d'onde la plus basse de la dite plage de longueurs d'onde et la longueur d'onde d'une pompe est comprise entre 10 et 15 THz.

3. Le système selon la revendication 1 ou 2, caractérisé en ce que les moyens d'injection injectent la pompe dans le sens de propagation des dits signaux.

4. Le système selon la revendication 1 ou 2, caractérisé en ce que les moyens d'injection injectent la pompe dans le sens inverse du sens de propagation des dits signaux.

5. Un procédé pour corriger l'inclinaison provoquée par l'amplification par effet Raman stimulé sur les signaux d'un système de transmission par fibres optiques à multiplexage en longueur d'onde, lors de la propagation dans une fibre des dits signaux, comprenant l'injection dans la fibre d'au moins une pompe à une longueur d'onde inférieure à la longueur d'onde des dits signaux.

6. Le procédé selon la revendication 5, caractérisé en ce que la différence entre la longueur d'onde la plus basse des dits signaux et la longueur d'onde d'une pompe est comprise entre 10 et 15 THz.

7. Le procédé selon la revendication 5 ou 6, caractérisé en ce que la pompe est injectée dans le sens de propagation des dits signaux.

8. Le procédé selon la revendication 5 ou 6, caractérisé en ce que la pompe est injectée dans le sens inverse du sens de propagation des dits signaux.
